# EUROPÄISCHE PATENTANMELDUNG

(11) **EP 2 704 127 A2**
(43) Veröffentlichungstag der Anmeldung: **05.03.2014**
(21) Anmeldenummer: 13162873.7
(22) Anmeldetag: 09.04.2013
(51) Int. Cl.: G09B 25/06, G09B 23/40

(54) **Vorrichtung und Verfahren zur Prädiktion von geomechanischen Veränderungen in einer geomechanischen Formation**

(30) Priorität: 19.06.2012 DE 102012210296
(71) Anmelder: Siemens Aktiengesellschaft, 80333 München (DE)
(72) Erfinder: Hartmann, Dirk, 85617 Aßling (DE); Paffrath, Meinhard, 85622 Feldkirchen (DE); Wever, Utz, 81539 München (DE)

(57) **Zusammenfassung**

Die vorliegende Erfindung offenbart eine Vorrichtung zur Prädiktion von geomechanischen Veränderungen in einer geomechanischen Formation, mit einer Schnittstelle, welche dazu ausgebildet ist, prognostizierte Umweltdaten zu erfassen, mit mindestens einer Sensorschnittstelle, welche dazu ausgebildet ist, von mindestens einem Sensor aktuelle geomechanische Daten der geomechanischen Formation zu erfassen, mit einer Prädiktionseinrichtung, die dazu ausgebildet ist, geomechanische Veränderungen in der geomechanischen Formation basierend auf den prognostizierten Umweltdaten und/oder den erfassten geomechanischen Daten vorherzusagen. Die vorliegende Erfindung offenbart ferner ein Verfahren.

## Beschreibung

### GEBIET DER ERFINDUNG

Die vorliegende Erfindung betrifft eine Vorrichtung zur Prädiktion von geomechanischen Veränderungen in einer geomechanischen Formation und ein entsprechendes Verfahren.

### TECHNISCHER HINTERGRUND

Die Überwachung geomechanischer Formationen ist heute eine wichtige Aufgabe zum Schutz von Städten bzw. Dörfern.

Auch wenn die vorliegende Erfindung mit einer Vielzahl geomechanischer Formationen eingesetzt werden kann, wird die vorliegende Erfindung im Folgenden vorwiegend mit Bezug auf Deiche bzw. Dämme beschrieben.

Heute werden eine Vielzahl von Städten oder Dörfern von Deichen bzw. Dämmen geschützt. In der Vergangenheit haben Hochwassersituationen immer wieder zu Deichbrüchen bzw. Dammbrüchen geführt. Das durch diese gebrochenen Deiche bzw. Dämme in das geschützte Gebiet fließende Wasser verursachte dabei häufig erhebliche Schäden.

Es ist davon auszugehen, dass auf Grund der klimatischen Veränderungen der letzten Jahre häufiger Hochwassersituationen auftreten werden, als dies in der Vergangenheit der Fall war.

Daher ist eine zuverlässige Überwachung der Deiche bzw. Dämme wichtig. Eine solche Überwachung wird heute üblicherweise manuell bzw. durch Personen durchgeführt, die vor Ort den Zustand eines Deichs bzw. Damms überwachen.

Dies ist sehr Zeitaufwändig und erfordert einen hohen Personaleinsatz.

Daher werden heute auch automatisierte Systeme eingesetzt, welche zur Überwachung eines Deichs bzw. Damms genutzt werden können. Solche Systeme sehen z.B. vor, dass über die gesamte Länge des Deichs bzw. Damms eine Vielzahl von Sensoren an bzw. in dem Deich bzw. Damm angebracht werden, welche dazu dienen die manuelle Überwachung zu ersetzten oder zumindest zu unterstützen.

Im Rahmen des europäischen Forschungsprojekts Morph (Marine Robotic System of Self Organizing, Logically Linked Physical Nodes) wird ferner an einem System gearbeitet, welches den Zustand von Deichen bzw. Dämmen mit Hilfe eines Schwarms von Robotern überwacht.

Die genannten Verfahren bzw. Systeme zur Überwachung von Deichen bzw. Dämmen benötigen eine große Menge an Ressourcen. Ferner können diese Verfahren bzw. Systeme lediglich den aktuellen Zustand eines Deichs bzw. Damms dokumentieren.

### ZUSAMMENFASSUNG DER ERFINDUNG

Es ist daher eine Aufgabe der vorliegenden Erfindung, ein verbessertes Verfahren zum Überwachen von geomechanischen Formationen bereitzustellen.

Diese Aufgabe wird erfindungsgemäß durch die Merkmale der unabhängigen Ansprüche gelöst.

Demgemäß ist vorgesehen:
- eine Vorrichtung zur Prädiktion von geomechanischen Veränderungen in einer geomechanischen Formation, mit einer Schnittstelle, welche dazu ausgebildet ist, prognostizierte Umweltdaten für das Umfeld der geomechanischen Formation zu erfassen, mit mindestens einer Sensorschnittstelle, welche dazu ausgebildet ist, von mindestens einem Sensor aktuelle geomechanische Daten der geomechanischen Formation zu erfassen, und mit einer Prädiktionseinrichtung, die dazu ausgebildet ist, geomechanische Veränderungen in der geomechanischen Formation zumindest basierend auf den prognostizierten Umweltdaten und/oder den erfassten geomechanischen Daten vorherzusagen.
- ein Verfahren zur Prädiktion von geomechanischen Veränderungen in einer geomechanischen Formation, mit den Schritten Erfassen prognostizierter Umweltdaten für das Umfeld der geomechanischen Formation, Erfassen aktueller geomechanischer Daten der geomechanischen Formation von mindestens einem Sensor, und Vorhersagen geomechanischer Veränderungen in der geomechanischen Formation zumindest basierend auf den erfassten prognostizierten Umweltdaten und/oder den erfassten aktuellen geomechanischen Daten.

Die der vorliegenden Erfindung zu Grunde liegende Erkenntnis besteht darin, dass eine Überwachung von geomechanischen Formationen üblicherweise sehr aufwändig ist.

Die der vorliegenden Erfindung zu Grunde liegende Idee besteht nun darin, dieser Erkenntnis Rechnung zu tragen und eine Möglichkeit vorzusehen, durch geeignete Prädiktion eine Überwachung von geomechanischen Formationen zu vereinfachen bzw. zu unterstützen.

Dazu sieht die vorliegende Erfindung vor, dass sowohl prognostizierte Umweltdaten, wie z.B. eine Wettervorhersage, als auch mittels Sensoren aufgenommene Daten der geomechanischen Formation in eine Prädiktion der Veränderungen der geomechanischen Formation einfließen.

Dadurch wird es möglich, mittels der Prädiktion Veränderungen der geomechanischen Formation zu vorherzusagen und so die Überwachung einer geomechanischen Formation zu unterstützen. Vorteilhafte Ausführungsformen und Weiterbildungen ergeben sich aus den Unteransprüchen sowie aus der Beschreibung unter Bezugnahme auf die Figuren.

In einer Ausführungsform weist die geomechanische Formation einen Deich und/oder einen Damm und/oder einen Berghang und/oder eine Felsformation auf. Dadurch können Veränderung in besonders häufig auftretenden und besonders wichtigen geomechanischen Formationen mittels der vorliegenden Erfindung vorhergesagt werden.

In einer Ausführungsform ist die Schnittstelle dazu ausgebildet, zumindest eine Temperatur und/oder eine Niederschlagswahrscheinlichkeit und/oder eine Niederschlagsmenge und/oder eine Luftfeuchtigkeit und/oder einen Luftdruck und/oder einen Wasserspiegel zu erfassen. Dies ermöglicht es, eine Vielzahl von prognostizierten Umweltdaten für die Vorhersage geomechanischer Veränderungen zu nutzen.

Zusätzlich oder alternativ ist die Schnittstelle dazu ausgebildet, prognostizierte Umweltdaten von Wettersensoren und/oder einer Wetterstation und/oder einem über ein öffentliches Datennetzwerk zugänglichen Server und/oder einem Wetterdienst abzurufen. Können die prognostizierten Umweltdaten aus einer Vielzahl verfügbarer Datenquellen abgefragt werden, wird eine flexible Anpassung der vorliegenden Erfindung an unterschiedliche Rahmenbedingungen möglich.

In einer Ausführungsform ist die mindestens eine Sensorschnittstelle dazu ausgebildet, aktuelle geomechanische Daten von einem Temperatursensor und/oder einem Feuchtigkeitssensor und/oder einem Wasserstandssensor zu erfassen. Dies ermöglicht es, Sensoren in den geomechanischen Formationen anzubringen und mittels der Sensoren die geomechanischen Daten sehr genau zu erfassen. In einer weiteren Ausführungsform ist die Sensorschnittstelle dazu ausgebildet, aktuelle geomechanische Daten von einem Drucksensor, einem Displacement-Sensor (Verschiebungen in der Struktur), einem Leitfähigkeitssensor und/oder weiteren Sensoren zu erfassen.

In einer Ausführungsform weist die Prädiktionseinrichtung eine Simulationseinrichtung auf, die dazu ausgebildet ist, mindestens eine simulierte geomechanische Veränderung in den geomechanischen Formationen unter Verwendung unterschiedlicher Parameter zu simulieren. Mittels der erfindungsgemäßen Simulationseinrichtung können die geomechanischen Veränderungen in den geomechanischen Formationen lediglich basierend auf den entsprechenden Parametern vorhergesagt werden. Als Parameter können z.B. geometrische Daten der geomechanischen Formation sowie Daten über die Beschaffenheit der geomechanischen Formation aber auch die prognostizierten Umweltdaten und die aktuellen geomechanischen Daten genutzt werden. Durch die Simulation wird es ferner möglich, die Anzahl an Sensoren, welche zur Überwachung der geomechanischen Formation benötigt werden, deutlich gegenüber herkömmlichen Verfahren zu reduzieren.

In einer Ausführungsform ist die Simulationseinrichtung dazu ausgebildet, eine Vielzahl von simulierten geomechanischen Veränderungen zu simulieren und zu speichern, wobei die Parameter zumindest Umweltdaten und/oder geomechanische Daten aufweisen. Ferner weist die Prädiktionseinrichtung ferner eine Vergleichseinrichtung auf, die dazu ausgebildet ist, für aktuelle Umweltdaten und/oder aktuelle geomechanischen Daten zumindest eine simulierte und gespeicherte geomechanische Veränderung zu identifizieren, welche die größten Übereinstimmungen mit den aktuellen Umweltdaten und/oder den aktuellen geomechanischen Daten aufweist, und/oder aus mindestens zwei simulierten und/oder gespeicherten geomechanischen Veränderung eine weitere geomechanische Veränderung interpoliert wird, welche die größten Übereinstimmungen mit den aktuellen Umweltdaten und/oder den aktuellen geomechanischen Daten aufweist. Dadurch wird es möglich, mögliche geomechanische Veränderungen einer geomechanischen Formation bereits vor dem eigentlichen Überwachen der geomechanischen Formation zu simulieren und zur Überwachung der geomechanischen Formation lediglich diejenige simulierte geomechanische Veränderung auszuwählen, deren Parameter den realen Parametern der zu überwachenden geomechanischen Formation am ähnlichsten sind. In einer Ausführungsform ist auch eine Interpolation der Ergebnisse zweier simulierter geomechanischer Veränderungen möglich.

In einer Ausführungsform ist die Simulationseinrichtung dazu ausgebildet, eine simulierte geomechanische Veränderung unter Verwendung aktueller Umweltdaten und/oder geomechanischer Daten zu simulieren. Ferner weist die Prädiktionseinrichtung eine Anpassungseinrichtung auf, die dazu ausgebildet ist, mindestens einen der Parameter für die Simulation entsprechend weiteren aktuellen Umweltdaten und weiteren aktuellen geomechanischen Daten anzupassen. Dies ermöglicht es, eine Simulation einer geomechanischen Formation basierend auf den exakten aktuell bestimmten Umweltdaten und/oder geomechanischen Daten durchzuführen. Mittels der Anpassungseinrichtung wird sichergestellt, dass die Simulation den realen Gegebenheiten weitestgehend entspricht.

In einer Ausführungsform ist die Anpassungseinrichtung dazu ausgebildet, den mindestens einen Parameter mittels eines nicht-linearen Filters, insbesondere mittels eines nicht-linearen Kalman-Filters anzupassen. Dies ermöglicht eine effiziente Anpassung der Parameter an die realen Bedingungen.

In einer Ausführungsform ist die Simulationseinrichtung dazu ausgebildet, sowohl eine Vielzahl von simulierten geomechanischen Veränderungen zu simulieren und zu speichern, als auch eine simulierte geomechanische Veränderung unter Verwendung aktueller Umweltdaten und/oder geomechanischer Daten zu simulieren. Dadurch wird es möglich die Ergebnisse der Simulation, welche vor der eigentlichen Überwachung einer geomechanischen Formation durchgeführt wird, mit den Ergebnissen der Simulation, welche mit Hilfe aktueller Parameter, also sozusagen in Echtzeit, durchgeführt wird, zu vergleichen und so die Zuverlässigkeit der Aussagen über die geomechanischen Veränderungen zu erhöhen.

In einer Ausführungsform werden Unsicherheiten in der Erfassung der Simulationsparameter und der Daten der geomechanischen Formation quantifiziert und in der Simulation berücksichtigt. In einer Ausführungsform werden zu den Parametern, deren Erfassung eine Unsicherheit aufweist, Konfidenzintervalle festgelegt. Dabei erlauben die Konfidenzintervalle eine Aussage über die Zuverlässigkeit der entsprechenden Simulation. Dadurch wird eine Aussage über die Zuverlässigkeit der Simulationsergebnisse möglich, welche eine Auswahl geeigneter Maßnahmen zur Absicherung der geomechanischen Formation vereinfachen.

In einer Ausführungsform werden die Unsicherheiten mittels einer Approximation durch polynomiale Expansion (Beschrieben in "Polynomial chaos for the approximation of uncertainties: Chances and Limits" von Augustin et al. in Journal of applied Mathematics, Vol. 19, pp. 149 - 190, 2008) berechnet.

In einer Ausführungsform wird eine geomechanische Formation entsprechend den Ergebnissen der Simulation angepasst bzw. verstärkt. Dies ermöglicht es, die in der Simulation vorhergesagten Veränderungen der jeweiligen geomechanischen Formation zu vermeiden bzw. deren Folgen zu lindern.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNGEN

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild einer Ausführungsform einer erfindungsgemäßen Vorrichtung;
- Fig. 2: ein Ablaufdiagramm einer Ausführungsform eines erfindungsgemäßen Verfahrens;
- Fig. 3: ein Blockschaltbild einer weiteren Ausführungsform einer erfindungsgemäßen Vorrichtung;
- Fig. 4: ein Blockschaltbild einer weiteren Ausführungsform einer erfindungsgemäßen Vorrichtung;
- Fig. 5: ein Blockschaltbild einer weiteren Ausführungsform einer erfindungsgemäßen Vorrichtung;
- Fig. 6: ein Diagramm einer Ausführungsform einer erfindungsgemäßen simulierten geomechanischen Veränderung.

In allen Figuren sind gleiche bzw. funktionsgleiche Elemente und Vorrichtungen - sofern nichts anderes angegeben ist - mit denselben Bezugszeichen versehen worden.

Im Rahmen dieser Patentanmeldung ist unter einer geomechanischen Formation unter anderem eine geologische Formation zu verstehen, die zumindest mechanischen Kräften ausgesetzt ist. Solche geomechanischen Formationen können z.B. Deiche, Dämme, Berghänge, Felsformationen, Baugruben oder dergleichen sein.

Unter einer geomechanischen Veränderung ist im Rahmen dieser Patentanmeldung unter anderem eine Veränderung einer geomechanischen Formation zu verstehen. Dies kann z.B. das Aufweichen eines Damms, das Unterspülen eines Damms, das Abrutschen eines Berghangs, das Einbrechen einer Baugrube oder dergleichen sein.

Als prognostizierte Umweltdaten werden im Rahmen dieser Patentanmeldung unter anderem Wetterprognosen, Wasserstandsprognosen, Temperaturprognosen, Niederschlagsprognosen oder dergleichen verstanden.

Unter geomechanischen Daten werden im Rahmen dieser Patentanmeldung unter anderem beliebige Daten bzw. Messwerte verstanden, die direkt an einer geomechanischen Formation aufgenommen werden. Dies können unter anderem Feuchtigkeit, Temperatur, Festigkeit, ein Wasserstand oder dergleichen sein.

### BESCHREIBUNG VON AUSFÜHRUNGSBEISPIELEN

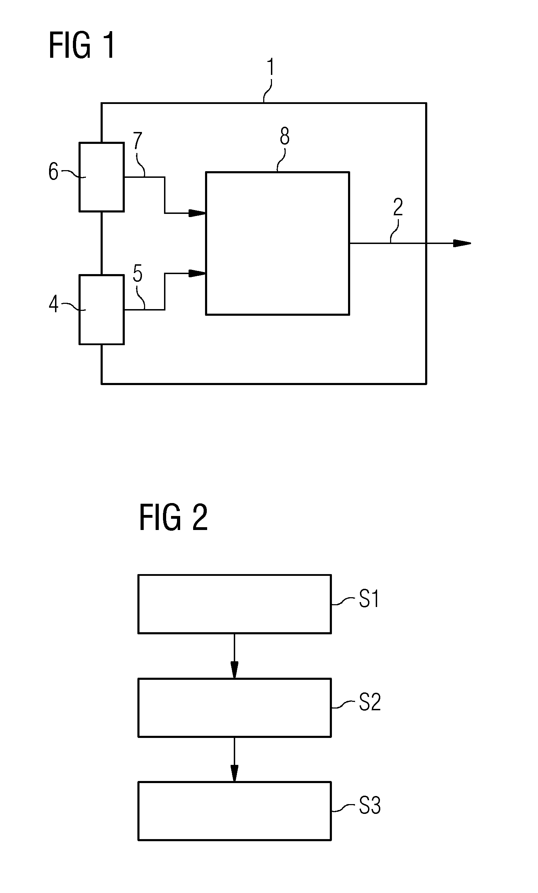

Fig. 1 zeigt ein Blockschaltbild einer Ausführungsform einer erfindungsgemäßen Vorrichtung 1.

Die Vorrichtung 1 zur Prädiktion von geomechanischen Veränderungen 2 weist eine Schnittstelle 4 und eine Sensorschnittstelle 6 auf, die beide mit einer Prädiktionseinrichtung 8 gekoppelt sind.

Die Schnittstelle 4 ist dazu ausgebildet, prognostizierte Umweltdaten 5 zu erfassen. Dies kann z.B. direkt über eine Verbindung zu einer sog. Wetterstation erfolgen. Die Schnittstelle 4 kann aber z.B. auch als Ethernet-Schnittstelle 4 ausgebildet sein und die prognostizierten Umweltdaten 5 von einem Internetserver eines Wetterdienstes abrufen.

Die Sensorschnittstelle 6 der Vorrichtung 1 ist dazu ausgebildet, von mindestens einem Sensor aktuelle geomechanische Daten 7 der geomechanischen Formation 3 zu erfassen. Dabei kann die Vorrichtung 1 über die Sensorschnittstelle 6 direkt mit den Sensoren verbunden sein. In einer weiteren Ausführungsform kann die Sensorschnittstelle 6 aber auch als Netzwerkschnittstelle 6 ausgebildet sein und die Vorrichtung 1 über ein Datennetzwerk, z.B. das Internet, mit den entsprechenden Sensoren koppeln. Dies ermöglicht eine räumliche Trennung der Vorrichtung 1 von der geomechanischen Formation 3.

Schließlich ist die Prädiktionseinrichtung 8 dazu ausgebildet, geomechanische Veränderungen 2 in der geomechanischen Formation 3 zumindest basierend auf den prognostizierten Umweltdaten 5 und/oder den erfassten geomechanischen Daten 7 vorherzusagen. Die Prädiktionseinrichtung 8 nutzt zur Vorhersage der geomechanischen Veränderungen 2 in der geomechanischen Formation 3 dabei unter anderem geometrische Daten der geomechanischen Formation 3. Ferner kann die Prädiktionseinrichtung 8 zur Vorhersage der geomechanischen Veränderungen 2 auch Daten über die Beschaffenheit, d.h. das Material, die Festigkeit und dergleichen, der geomechanischen Formation 3 nutzen.

Fig. 2 zeigt ein Ablaufdiagramm einer Ausführungsform eines erfindungsgemäßen Verfahrens.

In einem ersten Schritt S1 werden prognostizierte Umweltdaten 5 erfasst. In einem zweiten Schritt S2 des Verfahrens werden aktuelle geomechanische Daten 7 der geomechanischen Formation 3 erfasst, die in einer Ausführungsform von mindestens einem Sensor stammen.

Anschließend werden in einem dritten Schritt S3 geomechanische Veränderungen 2 in der geomechanischen Formation 3 zumindest basierend auf den erfassten prognostizierten Umweltdaten 5 und/oder den erfassten aktuellen geomechanischen Daten 7 vorhergesagt.

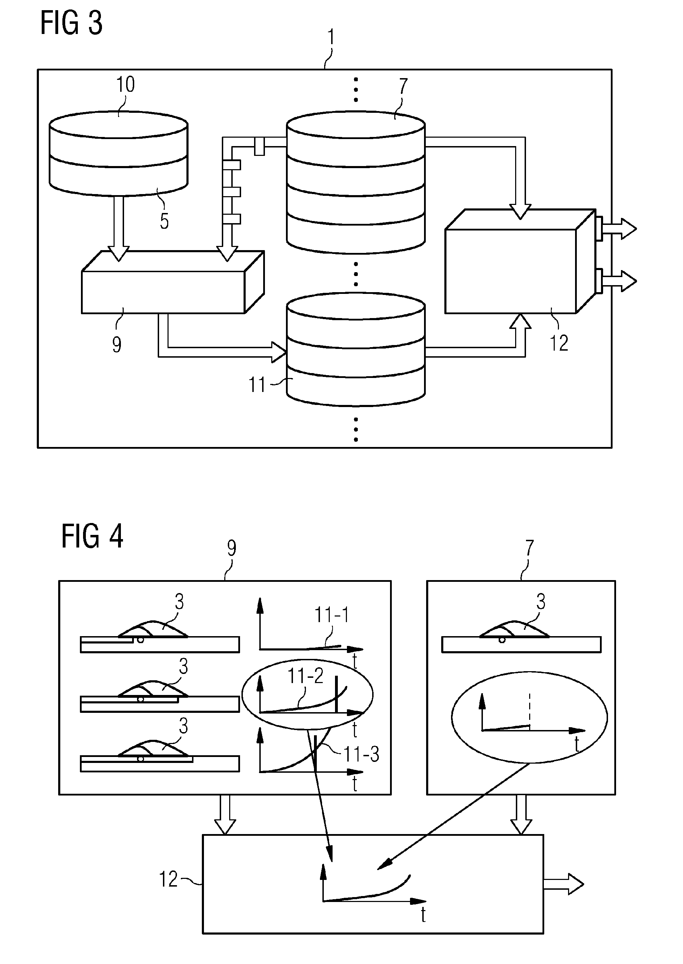

Fig. 3 zeigt ein Blockschaltbild einer weiteren Ausführungsform einer erfindungsgemäßen Vorrichtung 1.

Die Vorrichtung 1 in Fig. 3 weist eine Quelle für aktuelle geomechanische Daten 7 auf. Diese Quelle kann z.B. aus einer Vielzahl an Sensoren bestehen, die in der jeweiligen geomechanischen Formation 3 einen Wasserstand, einen Druck, eine Sättigung bzw. Durchnässung, eine Temperatur oder dergleichen erfassen. In Fig. 3 ist die Prädiktionseinrichtung 8 nicht explizit dargestellt. Vielmehr sind die Simulationseinrichtung 9 und die Vergleichseinrichtung 12 dargestellt, welche die Prädiktionseinrichtung 8 bilden.

Die Vorrichtung 1 weist ferner eine Quelle für prognostizierte Umweltdaten 5 und weitere Parameter 10 auf, welche z.B. als Netzwerkserver ausgebildet ist, der eine Datenbank mit prognostizierten Umweltdaten 5 und den weiteren Parametern 10 aufweist. Weitere Parameter 10 sind in einer Ausführungsform die geometrischen Daten und weitere Beschaffenheitsdaten der jeweiligen geomechanischen Formation 3. Die Beschaffenheitsdaten können z.B. Daten über das Material, die Bodenart, die Festigkeit des jeweiligen Materials und dergleichen aufweisen, die für eine Simulation notwendig sind.

Die prognostizierten Umweltdaten 5 und die weiteren Parameter 10 können dabei jeweils mit einer Information über die Unsicherheit bezüglich der einzelnen Daten bzw. Parameter versehen werden. Beispielsweise können zu den prognostizierten Umweltdaten 5 und den weiteren Parametern 10 weitere statistische Werte, wie z.B. eine Varianz, eine Standardabweichung und dergleichen, vorgesehen werden.

Sowohl die prognostizierten Umweltdaten 5 als auch die weiteren Parameter 10 und die geomechanischen Daten 7 werden einer Simulationseinrichtung 9 zugeführt.

Die Simulationseinrichtung 9 ist dazu ausgebildet, eine Vielzahl von unterschiedlichen möglichen simulierten geomechanischen Veränderungen 11 der geomechanischen Formation 3 zu simulieren und diese z.B. in einer Datenbank zu speichern. Dabei simuliert die Simulationseinrichtung 9 die Vielzahl von unterschiedlichen möglichen simulierten geomechanischen Veränderungen 11 für eine gegebene geomechanische Formation 3 mit einer Vielzahl unterschiedlicher prognostizierten Umweltdaten 5 und weiterer Parameter 10. Dabei können die prognostizierten Umweltdaten 5 und die weiteren Parameter 10 innerhalb deren möglicher Grenzen in vorgegebenen Schritten variiert werden. So wird es möglich annähernd alle möglichen Szenarien für die jeweilige geomechanische Formation 3 zu simulieren.

Die Simulationseinrichtung 9 ist dabei dazu ausgebildet zu jeder der simulierten geomechanischen Veränderungen 11 den Zeitpunkt und den genauen Ort einer simulierten Beschädigung bzw. eines simulierten Versagens der geomechanischen Formation 3 zu speichern.

In noch einer weiteren Ausführungsform ist die Simulationseinrichtung 9 dazu ausgebildet, in der Simulation simulierte Sensoren vorzusehen, welche sich in der Simulation an denjenigen Stellen der geomechanischen Formation 3 befinden, an welchen sich die realen Sensoren in der realen geomechanischen Formation 3 befinden.

Die Simulationseinrichtung 9 kann in unterschiedlichen Ausführungsformen als Hardware, Software, Firmware oder eine beliebige Kombination daraus ausgebildet sein.

Die Vorrichtung 1 weist ferner eine Vergleichseinrichtung 12 auf, die dazu ausgebildet ist, die in der Datenbank gespeicherten simulierten geomechanischen Veränderungen 11 abzufragen und basierend auf diesen und auf aktuellen geomechanischen Daten 7 der geomechanischen Formation 3 diejenige simulierte Veränderung 11 auszuwählen, welche mit den aktuellen geomechanischen Daten 7 die größten Übereinstimmungen aufweist. Dazu vergleicht die Vergleichseinrichtung 12 in einer Ausführungsform die Daten der realen Sensoren mit den Daten der virtuellen Sensoren.

In einer weiteren Ausführungsform ist die Vergleichseinrichtung 12 dazu ausgebildet, eine weitere simulierte geomechanische Veränderung 11 aus mehreren durch die Simulationseinrichtung 9 simulierten geomechanischen Veränderungen 11 zu interpolieren, falls keine bereits simulierte geomechanische Veränderung 11 ausreichende Übereinstimmungen mit den von den Sensoren erfassten aktuellen geomechanischen Daten 7 aufweist.

Die Vergleichseinrichtung 12 ist in einer Ausführungsform ferner dazu ausgebildet, eine Abschätzung für das Risiko einer Beschädigung bzw. eines Versagens der geomechanischen Formation 3 basierend auf den Informationen über die Unsicherheiten bezüglich der einzelnen Daten bzw. Parameter ausgeben. Ferner ist die Vergleichseinrichtung 12 in einer Ausführungsform dazu ausgebildet, eine Echtzeitüberwachung der entsprechenden geomechanischen Formation 3 durchzuführen und entsprechende Daten auszugeben.

Die Vergleichseinrichtung 12 kann in unterschiedlichen Ausführungsformen als Hardware, Software, Firmware oder eine beliebige Kombination daraus ausgebildet sein.

Fig. 4 zeigt ein Blockschaltbild einer weiteren Ausführungsform einer erfindungsgemäßen Vorrichtung 1.

Das Blockschaltbild der Fig. 4 stellt ein vereinfachtes Blockschaltbild der Fig. 3 dar, welches zu Veranschaulichung der Funktion der Vorrichtung 1 dient.

In Fig. 4 ist die Simulationseinrichtung 9 dargestellt, die für eine geomechanische Formation 3 drei unterschiedliche Szenarien simuliert. Die Simulationseinrichtung 9 erzeugt durch diese Simulation drei unterschiedliche simulierte geomechanische Veränderungen 11-1 - 11-3, welche der Vergleichseinrichtung 12 zugeführt werden.

In Fig. 4 ist ferner dargestellt, dass aktuelle geomechanische Daten 7 der geomechanischen Formation 3 erfasst werden und ebenfalls der Vergleichseinrichtung 12 zugeführt werden.

Die Vergleichseinrichtung 12 wählt basierend auf den aktuellen geomechanischen Daten 7 eine entsprechende geomechanische Veränderung 11-1 - 11-3, in diesem Fall die geomechanische Veränderung 11-2, aus, welche die größten Übereinstimmungen mit den aktuellen geomechanischen Daten 7 aufweist.

Die Vergleichseinrichtung 12 gibt in einer Ausführungsform die ausgewählte geomechanische Veränderung 11-2 aus, welche zur weiteren Verarbeitung bzw. Auswertung genutzt werden kann. In einer Ausführungsform gibt die Vergleichseinrichtung 12 eine aus der simulierten geomechanischen Veränderung 11-2 abgeleitete Abschätzung über den Zeitpunkt des Versagens der geomechanischen Formation 3 aus.

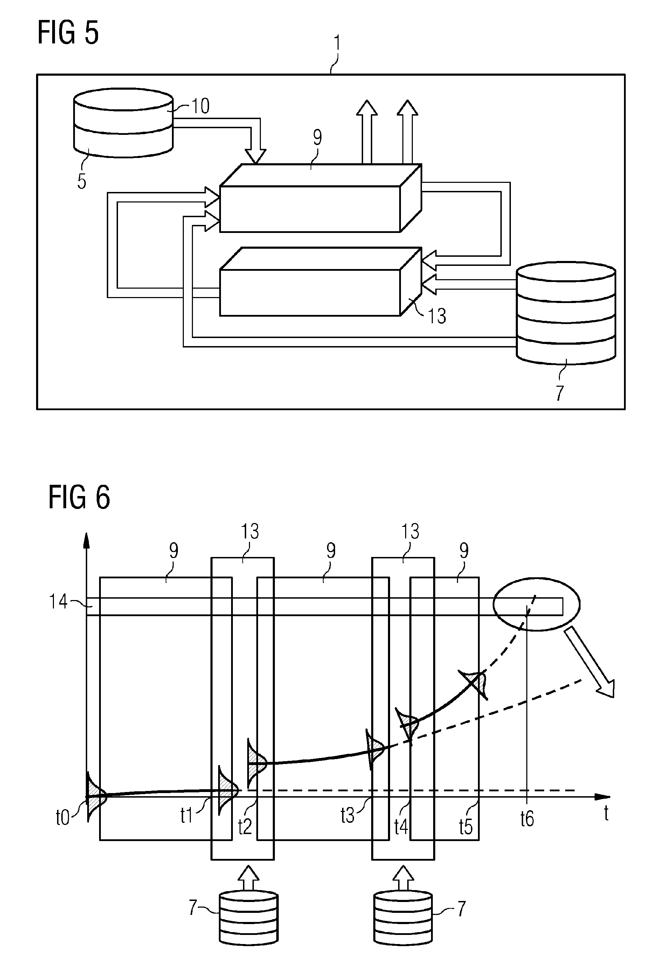

Fig. 5 zeigt ein Blockschaltbild einer weiteren Ausführungsform einer erfindungsgemäßen Vorrichtung 1. In Fig. 5 ist die Prädiktionseinrichtung 8 nicht explizit dargestellt. Vielmehr sind die Simulationseinrichtung 9 und die Anpassungseinrichtung 13 dargestellt, welche die Prädiktionseinrichtung 8 bilden.

Im Gegensatz zu der Vorrichtung 1 in Fig. 3 simuliert die Vorrichtung 1 in Fig. 5 keine Vielzahl geomechanischer Veränderung im Voraus. Die Vorrichtung 1 in Fig. 5 führt vielmehr eine einzelne Echtzeitsimulation durch, welche anhand aktueller geomechanischer Daten 7 kontinuierlich an die realen Gegebenheiten der geomechanischen Formation 3 angepasst wird.

Dazu weist die Vorrichtung 1 eine Simulationseinrichtung 9 auf, welche dazu ausgebildet ist, diese einzelne Echtzeitsimulation durchzuführen.

Dazu ist die Simulationseinrichtung 9 mit einer Quelle für prognostizierte Umweltdaten 5 und weitere Parameter 10 gekoppelt, welche z.B. als Netzwerkserver ausgebildet ist, der eine Datenbank mit prognostizierten Umweltdaten 5 und den weiteren Parametern 10 aufweist.

Die weiteren Parameter 10 sind ebenso, wie in Fig. 3 beschrieben, in einer Ausführungsform die geometrischen Daten und weitere Beschaffenheitsdaten der jeweiligen geomechanischen Formation 3. Die Beschaffenheitsdaten können z.B. Daten über das Material, die Bodenart, die Festigkeit des jeweiligen Materials und dergleichen aufweisen, die für eine Simulation notwendig sind. Die prognostizierten Umweltdaten 5 und die weiteren Parameter 10 können dabei, ebenso, wie in Fig. 3 beschrieben, jeweils mit einer Information über die Unsicherheit bezüglich der einzelnen Daten bzw. Parameter versehen werden. Beispielsweise können zu den prognostizierten Umweltdaten 5 und den weiteren Parametern 10 weitere statistische Werte, wie z.B. eine Varianz, eine Standardabweichung und dergleichen, vorgesehen werden.

Im Gegensatz zu der Vorrichtung 1 der Fig. 3 weist die Vorrichtung 1 der Fig. 5 keine Vergleichseinrichtung 12 auf. Vielmehr weist die Vorrichtung 1 der Fig. 5 eine Anpassungseinrichtung 13 auf, welche dazu ausgebildet ist, die Simulation, welche die Simulationseinrichtung 9 durchführt an die aktuellen prognostizierten Umweltdaten 5 bzw. die aktuellen geomechanischen Daten 7 anzupassen.

Die Anpassungseinrichtung 13 bedient sich in einer Ausführungsform zur Anpassung der Simulation bzw. der Parameter der Simulation eines nicht-linearen Filters, insbesondere eines nicht-linearen Kalman-Filters.

Die Vorrichtung 1 der Fig. 5 durchläuft also wiederholt einen Zyklus der aus einer Simulationsphase und einer Anpassungsphase besteht. Dadurch wird die Qualität der Simulation iterativ verbessert. Dies wird in Fig. 6 noch einmal verdeutlicht.

In einer Ausführungsform ist die Simulationseinrichtung 9 dazu ausgebildet, sowohl eine Vielzahl von simulierten geomechanischen Veränderungen 11 zu simulieren und zu speichern, als auch eine simulierte geomechanische Veränderung 11 unter Verwendung aktueller Umweltdaten 5 und/oder geomechanischer Daten 7 in Echtzeit zu simulieren. Dadurch wird es möglich die Ergebnisse der Simulation, welche vor der eigentlichen Überwachung einer geomechanischen Formation 3 durchgeführt wird, mit den Ergebnissen der Simulation, welche mit Hilfe aktueller Parameter 10 durchgeführt wird, zu vergleichen und so die Zuverlässigkeit der Aussagen über die geomechanischen Veränderungen 2 zu erhöhen.

Fig. 6 zeigt ein Diagramm einer Ausführungsform einer erfindungsgemäßen simulierten geomechanischen Veränderung 2.

In dem Diagramm in Fig. 6 stellt die Abszissenachse die Zeit t dar. Die Ordinatenachse stellt den Wert eines Parameters der geomechanischen Formation 3 dar, der eine Aussage über eine Beschädigung bzw. ein Versagen der geomechanischen Formation 3 erlaubt. Die oberen 5 Prozent der Ordinatenachse sind in dem Diagramm als Fehlergrenze markiert. Das bedeutet, dass die geomechanische Formation 3 beschädigt ist oder versagt, wenn der Wert des Parameters diese Fehlergrenze erreicht.

In Fig. 6 sind die einzelnen wiederholten Phasen des Simulierens und des Anpassens deutlich dargestellt. Dabei sind in Fig. 6 die einzelnen Phasen mit den Bezugszeichen derjenigen Einrichtung versehen, welche die jeweilige Phase durchführt.

So ist in dem Diagramm beginnend zum Zeitpunkt t0 bis zum Zeitpunkt t1 eine Kurve zu sehen, die von 0 lediglich leicht ansteigt und dann bis zu dem Zeitpunkt t1 annähernd parallel zu der Abszissenachse verläuft. Dies stellt das Ergebnis einer ersten Simulationsphase dar.

Zum Zeitpunkt t1 beginnt eine Anpassungsphase, in welcher die Parameter der Simulation an aktuelle geomechanische Daten 7 angepasst werden.

Daraufhin beginnt zu dem Zeitpunkt t2 eine erneute Simulationsphase. In dieser Simulationsphase beginnt die Kurve bei etwa 20% des Maximalwertes der Ordinatenachse und verläuft mit zunehmender Steigung bis zu dem Zeitpunkt t3. Dies stellt das Ergebnis der zweiten Simulationsphase dar.

Zum Zeitpunkt t3 beginnt eine erneute Anpassungsphase, in welcher die Parameter der Simulation erneut an aktuelle geomechanische Daten 7 angepasst werden.

Daraufhin beginnt zu dem Zeitpunkt t4 eine erneute Simulationsphase. In dieser Simulationsphase beginnt die Kurve bei etwa 30% des Maximalwertes der Ordinatenachse und verläuft mit einer größeren weiterhin zunehmenden Steigung bis zu dem Zeitpunkt t5. Dies stellt das Ergebnis der dritten Simulationsphase dar.

Der Zeitpunkt t5 stellt im Ablauf des Verfahrens die Gegenwart dar. Durch die Simulation kann die Entwicklung des in dem Diagramm dargestellten Parameters bis zu dem Zeitpunkt t6 extrapoliert werden, an welchem der Parameter die Fehlergrenze erreicht. Dadurch kann eine Abschätzung über den Zeitpunkt des Versagens oder der Beschädigung der geomechanischen Formation getroffen werden.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

## Patentansprüche

1. Vorrichtung (1) zur Prädiktion von geomechanischen Veränderungen (2) in einer geomechanischen Formation (3), mit einer Schnittstelle (4), welche dazu ausgebildet ist, prognostizierte Umweltdaten (5) für das Umfeld der geomechanischen Formation (3) zu erfassen;
mindestens einer Sensorschnittstelle (6), welche dazu ausgebildet ist, von mindestens einem Sensor aktuelle geomechanische Daten (7) der geomechanischen Formation (3) zu erfassen; einer Prädiktionseinrichtung (8), die dazu ausgebildet ist, geomechanische Veränderungen (2) in der geomechanischen Formation (3) zumindest basierend auf den prognostizierten Umweltdaten (5) und/oder den erfassten geomechanischen Daten (7) vorherzusagen.

2. Vorrichtung nach Anspruch 1, wobei die geomechanische Formation (3) einen Deich und/oder einen Damm und/oder einen Berghang und/oder eine Felsformation aufweist.

3. Vorrichtung nach einem der vorherigen Ansprüche, wobei die Schnittstelle (4) dazu ausgebildet ist, zumindest eine Temperatur und/oder eine Niederschlagswahrscheinlichkeit und/oder eine Niederschlagsmenge und/oder eine Luftfeuchtigkeit und/oder einen Luftdruck und/oder einen Wasserspiegel zu erfassen; und/oder
wobei die Schnittstelle (4) dazu ausgebildet ist, prognostizierte Umweltdaten (5) von Wettersensoren und/oder einer Wetterstation und/oder einem über ein öffentliches Datennetzwerk zugänglichen Server und/oder einem Wetterdienst abzurufen.

4. Vorrichtung nach einem der vorherigen Ansprüche, wobei die mindestens eine Sensorschnittstelle (6) dazu ausgebildet ist, aktuelle geomechanische Daten (7) von einem Temperatursensor und/oder einem Feuchtigkeitssensor und/oder einem Wasserstandssensor und/oder einem Drucksensor und/oder einem Displacement-Sensor und/oder einem Leitfähigkeitssensor zu erfassen.

5. Vorrichtung nach einem der vorherigen Ansprüche, wobei die Prädiktionseinrichtung (8) aufweist:
eine Simulationseinrichtung (9), die dazu ausgebildet ist,
mindestens eine simulierte geomechanische Veränderung (11) in den geomechanischen Formationen (3) unter Verwendung unterschiedlicher Parameter (10) zu simulieren.

6. Vorrichtung nach Anspruch 5, wobei die Simulationseinrichtung (9) dazu ausgebildet ist, eine Vielzahl von simulierten geomechanischen Veränderungen (11) zu simulieren und/oder zu speichern, wobei die Parameter (10) zumindest Umweltdaten und/oder geomechanische Daten (7) aufweisen; und wobei die Prädiktionseinrichtung (8) ferner eine Vergleichseinrichtung (12) aufweist, die dazu ausgebildet ist, für aktuelle Umweltdaten und/oder aktuelle geomechanischen Daten (7) zumindest eine simulierte und/oder gespeicherte geomechanische Veränderung (11) zu identifizieren, welche die größten Übereinstimmungen mit den aktuellen Umweltdaten und/oder den aktuellen geomechanischen Daten (7) aufweist, und/oder aus mindestens zwei simulierten und/oder gespeicherten geomechanischen Veränderung (11) eine weitere geomechanische Veränderung (11) interpoliert, welche die größten Übereinstimmungen mit den aktuellen Umweltdaten und/oder den aktuellen geomechanischen Daten (7) aufweist.

7. Vorrichtung nach einem der vorherigen Ansprüche 5 und 6, wobei die Simulationseinrichtung (9) dazu ausgebildet ist, eine simulierte geomechanische Veränderung (11) unter Verwendung aktueller Umweltdaten und/oder geomechanischer Daten zu simulieren; und
wobei die Prädiktionseinrichtung (8) eine Anpassungseinrichtung (13) aufweist, die dazu ausgebildet ist, mindestens einen der Parameter (10) für die Simulation entsprechend weiteren aktuellen Umweltdaten und/oder weiteren aktuellen geomechanischen Daten (7) anzupassen.

8. Vorrichtung nach Anspruch 7, wobei die Anpassungseinrichtung (13) dazu ausgebildet ist, den mindestens einen Parameter (10) mittels eines nicht-linearen Filters, insbesondere mittels eines nicht-linearen Kalman-Filters anzupassen.

9. Verfahren zur Prädiktion von geomechanischen Veränderungen (2) in einer geomechanischen Formation (3), mit den Schritten
Erfassen (S1) prognostizierter Umweltdaten (5) für das Umfeld der geomechanischen Formation (3);
Erfassen (S2) aktueller geomechanischer Daten (7) der geomechanischen Formation (3) von mindestens einem Sensor; Vorhersagen (S3) geomechanischer Veränderungen (2) in der geomechanischen Formation (3) zumindest basierend auf den erfassten prognostizierten Umweltdaten (5) und/oder den erfassten aktuellen geomechanischen Daten (7).

10. Verfahren nach Anspruch 9, wobei beim Erfassen (S1) prognostizierter Umweltdaten (5) eine Temperatur und/oder eine Niederschlagswahrscheinlichkeit und/oder eine Niederschlagsmenge und/oder eine Luftfeuchtigkeit und/oder einen Luftdruck und/oder einen Wasserspiegel erfasst wird.

11. Verfahren nach einem der Ansprüche 9 und 10, wobei beim Erfassen (S2) aktueller geomechanischer Daten (7) eine Temperatur und/oder eine Feuchtigkeit und/oder ein Wasserstand und/oder einen Druck und/oder eine Verschiebung und/oder eine Leitfähigkeit erfasst werden.

12. Verfahren nach einem der Ansprüche 9 bis 11, wobei beim Vorhersagen (S3) geomechanischer Veränderungen (2) mindestens eine simulierte geomechanische Veränderung (11) in der geomechanischen Formation (3) unter Verwendung unterschiedlicher Parameter (10) simuliert wird.

13. Verfahren nach Anspruch 12, wobei beim Simulieren eine Vielzahl von simulierten geomechanischen Veränderungen (11) simuliert und/oder gespeichert werden, wobei die Parameter (10) zumindest Umweltdaten (5) und/oder geomechanische Daten (7) aufweisen; und
wobei für aktuelle Umweltdaten (5) und/oder aktuelle geomechanischen Daten (7) zumindest eine simulierte und/oder gespeicherte geomechanische Veränderung (11) identifiziert wird, welche die größten Übereinstimmungen mit den aktuellen Umweltdaten (5) und/oder den aktuellen geomechanischen Daten (7) aufweist, und/oder aus mindestens zwei simulierten und/oder gespeicherten geomechanischen Veränderung (11) eine weitere geomechanische Veränderung (11) interpoliert wird, welche die größten Übereinstimmungen mit den aktuellen Umweltdaten und/oder den aktuellen geomechanischen Daten (7) aufweist.

14. Verfahren nach einem der Ansprüche 12 und 13, wobei beim Simulieren eine simulierte geomechanische Veränderung (11) unter Verwendung aktueller Umweltdaten (5) und/oder geomechanischer Daten (7) simulieren wird; und
wobei mindestens einer der Parameter (10) für die Simulation entsprechend weiteren aktuellen Umweltdaten (5) und/oder weiteren aktuellen geomechanischen Daten (7) angepasst wird.

15. Verfahren nach Anspruch 14, wobei der mindestens eine Parameter (10) mittels eines nicht-linearen Filters, insbesondere mittels eines nicht-linearen Kalman-Filters angepasst wird.
